# EUROPÄISCHE PATENTSCHRIFT

(11) **EP 0 910 472 B1**
(45) Veröffentlichungstag und Bekanntmachung des Hinweises auf die Patenterteilung: **01.09.1999**
(21) Anmeldenummer: 97938815.4
(22) Anmeldetag: 10.07.1997
(51) Int. Cl.: B01J 38/48

(54) **VERFAHREN ZUM REINIGEN UND/ODER REGENERIEREN VON GANZ ODER TEILWEISE DESAKTIVIERTEN KATALYSATOREN ZUR ENTSTICKUNG VON RAUCHGASEN**
METHOD OF CLEANING AND/OR REGENERATING WHOLLY OR PARTIALLY DE-ACTIVATED CATALYSTS FOR STACK-GAS NITROGEN SCRUBBING
PROCEDE PERMETTANT DE NETTOYER ET/OU DE REGENERER DES CATALYSEURS COMPLETEMENT OU PARTIELLEMENT DESACTIVES UTILISES POUR L'ELIMINATION DE L'AZOTE DANS DES GAZ BRULES

(30) Priorität: 12.07.1996 DE 19628212
(43) Veröffentlichungstag der Anmeldung: 28.04.1999
(73) Patentinhaber: Energie-Versorgung Schwaben AG, 70174 Stuttgart (DE)
(72) Erfinder: SCHNEIDER, Günter, D-71672 MARBACH (DE); BENZ, Jochen, D-71640 Ludwigsburg (DE); BUCK, Peter, D-74172 Neckarsulm (DE)
(74) Vertreter: Dreiss, Fuhlendorf, Steimle & Becker, Patentanwälte
(86) Internationale Anmeldenummer: EP9703650
(87) Internationale Veröffentlichungsnummer: WO9802248

(56) Entgegenhaltungen:
- EP-A- 0 136 966
- US-A- 4 210 628
- US-A- 4 729 975
- PATENT ABSTRACTS OF JAPAN vol. 012, no. 410 (C-540), 28.Oktober 1988 & JP 63 147555 A (ISHIKAWAJIMA HARIMA HEAVY IND CO LTD), 20.Juni 1988,
- PATENT ABSTRACTS OF JAPAN vol. 096, no. 012, 26.Dezember 1996 & JP 08 196920 A (NIPPON STEEL CORP), 6.August 1996,
- PATENT ABSTRACTS OF JAPAN vol. 001, no. 064 (C-017), 22.Juni 1977 & JP 52 027091 A (KOBE STEEL LTD), 1.März 1977,

## Beschreibung

Die Erfindung betrifft ein Verfahren zum Reinigen und/oder Regenerieren von ganz oder teilweise desaktivierten Katalysatoren zur Entstickung von Rauchgasen, wobei die Katalysatoren mit einer Wasch- bzw. Regenerierflüssigkeit behandelt werden.

Derartige Katalysatoren werden auch als SCR-Katalysatoren bezeichnet (Selective Catalytic Reduction). Die Desaktivierung dieser Katalysatoren hat mehrere verschiedene Ursachen, vor allem:
- Die Verstopfung von Waben bzw. Katalysatorfreiräumen. Dadurch erreicht das Rauchgas nicht den Katalysator und der verstopfte Katalysatorkanal wird nicht für die katalytische Reaktion genutzt. Um das installierte Katalysatormaterial möglichst effizient auszunutzen, wird versucht, Verstopfungen von Wabenkanälen oder Plattenkanälen durch Abreinigungsmaßnahmen, wie Dnmpfbläser in der DENOX-Anlage oder manuelle Reinigungsaktionen, zu verringern. Trotzdem verstopfen einige dieser Waben bzw. Freiräume der Katalysatoren mit der Zeit. Bei einigen Anlagen werden die Katalysatormodule ausgebaut und auf eine entsprechende Rütteleinrichtung gestellt. Durch Rüttelbewegungen lösen sich die Verstopfungen. Auf diese Weise bekommt das Rauchgas wieder Zugang zum Katalysatormaterial. Diese Aktivitätserhöhung stellt keine Regenerierung dar, sondern schafft lediglich Zugang zu dem verstopften Katalysatormaterial. Die sich während des Betriebs ausbildende Oberflächenschicht bleibt von dieser Reinigungsmaßnahme unberührt.
- Die Verschlechterung der Gasdiffusion an der Katalysatorwandoberfläche durch das Aufwachsen einer dünnen Oberflächenschicht von ca. 1 - 100 µm und das Verstopfen von Poren. Dadurch werden Poren des Katalysatormaterials vom Rauchgas nur noch schlecht oder gar nicht mehr erreicht. Die Bildung einer dünnen Oberflächenschicht verschlechtert die chemische Umsetzung von NOₓ und NH₃ zu N₂ und H₂O, indem die Gasdiffusion in das Katalysatormaterial stark behindert wird.
- Die Verblockung der aktiven katalytischen Zentren auf der Oberfläche der Katalysatoren durch Anlagerung von sogenannten Katalysatorgiften, z.B. As, K, Na. Die Anlagerung von Katalysatorgiften, wie z.B. Arsen, an aktive Zentren des Katalysators macht eine Reaktion an diesen Zentren unmöglich und trägt auf diese Weise ebenfalls zu einer Aktivitätsminderung des Katalysatormaterials bei.
- Die Abrasion von Katalysatormaterial durch im Rauchgas enthaltene Feststoffe, wie z.B. Flugasche. Durch den Katalysatormaterialverlust verringert sich das Katalysatormaterial und damit die für die Reaktion zur Verfügung stehende Oberfläche. Die Abrasion von Katalysatormaterial ist ein irreversibler Vorgang, dadurch entsteht ein bleibender Aktivitätsverlust. Bei der Abrasion durch Flugasche können auch gleichzeitig folgende Vorgänge ablaufen:
   - Abtragen von Katalysatormaterial und einer bestehenden Oberflächenschicht,
   - Zurückbleiben von Bestandteilen der Flugasche und dadurch Bildung einer neuen gasdiffusionshemmenden Oberflächenschicht.

In der DE 38 16 600 C2 wird ein Verfahren beschrieben, bei dem die Regeneration arsenkontaminierter Katalysatoren beschrieben wird. Dieses Verfahren berücksichtigt nicht den Anteil der Desaktivierung durch eine gasdiffusionshindernde Oberflächenschicht. Bei dem Verfahren nach DE 38 16 600 C2 wird als Waschsuspension wäßrige Salpetersäure-, Salzsäure-, Schwefelsäure- oder Essigsäure-Lösungen eingesetzt. Diese Waschsuspensionen haben den Nachteil, daß sie zum einen teuer sind, und die Entsorgung der mit Arsen kontaminierten Säuren aufwendig ist.

In der EP 0 136 966 B1 wird ein Verfahren beschrieben, in dem zunächst mit Trockendampf der an der Oberfläche anhaftende Staub entfernt wird. In einem zweiten Schritt sollen dann die Katalysatorgifte durch Naßdampf mit einem Nässeanteil ≤= 0,4 gelöst und ausgespült werden. Das Trocknen erfolgt wieder mit Trockendampf. Bei dem Verfahren nach EP 0 136 966 B1 wird im ersten Schritt die dünne, gasdiffusionshemmende Schicht nicht entfernt, sondern es werden lediglich verstopfte Kanäle wieder freigelegt. Großtechnisch wird dies in Form von sogenannten Staub- oder Rußbläsern schon seit langem praktiziert. Der zweite Schritt dieses Verfahrens kann nur bei Katalysatoren eine aktivitätserhöhende Wirkung haben, bei denen die gasdiffusionshemmende Schicht nicht oder nicht auf der gesamten Oberfläche vorhanden ist. Auch ist die Erzeugung von großen Mengen an Trocken- und Naßdampf sehr energieintensiv.

In der JP-A-63 147 555 wird ein Regenerationsverfahren für desaktivierte Katalysatoren beschrieben, in dem die Katalysatoren ausgebaut werden, in einen Korb gebracht werden welcher in einen Regenerationsbehandlungstank gehängt wird. In dem Tank besteht eine Regenerationsflüssigkeitsströmung. Die Flüssigkeit besteht aus einer Suspension von abrassiven Pulver in Wasser oder einer sauren Waschflüssigkeit.

Die JP-A-52 027 091 beschreibt ein Regenerierungsverfahren in dem leistungsgeminderte Katalysatoren mit Wasser oder verdünnter wässriger anorganischer Säure behandelt werden.

Die US 4,210,628 beschreibt Entstickungskatalysatoren aus pulverförmiger oder granulatförmiger Aktivkohle mit katalytischen Metallzusätzen (W, Mo, V, Cu, usw.). Bei Abnehmen der katalytischen Aktivität durch Ammoniumsulfatbildung werden die pulverförmigen, in eine Kolonne gepackten Katalysatorprodukte regeneriert, entweder in dem sie mit N₂ bei 350°C durchströmt werden, oder mit heißem Wasser bei ca. 80°C ausgewaschen werden.

In der DE 30 20 698 C2 wird ein Verfahren zur Reaktivierung von Katalysatoren beschrieben, das die desaktivierenden Substanzen mittels eines bestimmten Drucks und einer bestimmten Temperatur entfernt. Dabei können zur Optimierung des Verfahrens verschiedene Gase wie z.B. Methan, Propan, Kohlendioxid oder Argon zugesetzt werden. Dieses Verfahren berücksichtigt die gasdiffusionshemmende Oberflächenschicht nicht.

Ein großer Nachteil der meisten genannten Verfahren ist die Tatsache, daß diese nur in einer gesonderten Anlage realisiert werden können. Dazu ist der Ausbau der Katalysatoren und folglicherweise ein Stillstand der Anlage erforderlich.

Demgemäß ist es die Aufgabe der Erfindung, ein Verfahren der o.g. Art so weiterzubilden, daß die Gasdiffusion an der Oberfläche der Katalysatoren wieder ermöglicht wird, wobei zusätzlich die Verblockung der aktiven Zentren durch Katalysatorgifte möglichst weitgehend rückgängig gemacht wird, und das innerhalb der Entstickungsanlage ohne Ausbau der Katalysatoren durchführbar ist.

Die gestellte Aufgabe wird dadurch gelöst, daß als Wasch- bzw. Regenerierflüssigkeit für die Behandlung der desaktivierten Katalysatoren ungesäuertes Deionat eingesetzt wird.

Die Wirkungsweise der Erfindung beruht auf dem Auflösen und Entfernen der Oberflächenschicht zur Wiederherstellung der Gasdiffusion und der Freilegung von aktiven Zentren für die Entstickungsreaktion auf der Katalysatoroberfläche. Dabei muß die Zusammensetzung der Flüssigkeit so gewählt werden, daß bei einem geringen Verbrauch an Regeneriersuspension eine möglichst schnelle Lösung der Oberflächenschicht erreicht wird. Bei der Regenerierung von SCR-Katalysatoren hat es sich überraschenderweise als sinnvoll herausgestellt, für die Auflösung der Oberflächenschicht vollentsalztes Wasser, bzw. Deionat, einzusetzen. Der Einsatz von Deionat als Waschflüssigkeit verhindert das Eintragen von Katalysatorgiften mit der Waschflüssigkeit. Deionat hat gegenüber anderen möglichen Flüssigkeiten den Vorteil, daß es relativ preisgünstig ist und daß es meistens am Kraftwerkstandort selbst hergestellt werden kann. Die Katalysatorreinigung und -regenerierung funktioniert bei Umgebungstemperaturen, so daß keine Energie zum Aufheizen der Flüssigkeit nötig ist. Über dieses Verfahren kann die Zahl der zu entsorgenden desaktivierten Katalysatoren drastisch reduziert werden. Dieses Verfahren ist vor allem dazu geeignet, in Großanlagen zur Stickoxidminderung, sogenannten DENOX-Anlagen, die gebrauchten und desaktivierten Katalysatoren ohne Ausbau derselben zu regenerieren, d.h. die zurückgegangene katalytische Aktivität wieder anzuheben.

Eine vorteilhafte Weiterbildung dieses Verfahrens sieht vor, daS die Katalysatoren zuerst mechanisch gereinigt werden durch Absaugung oder Durchblasen der Ablagerungen, wonach sich dann ein Waschzyklus anschließt, der mittels einer Regeneriersuspension die Oberflächenschicht entfernt und die Verblockungen der aktiven Zentren weitgehend löst. Als vorteilhaft für den Regeneriersuspensionsverbrauch hat es sich erwiesen, wenn nur ein kleiner Teil der Regeneriersuspension kontinuierlich abgezogen und erneuert wird, d.h. der große Teil kann im Umlaufbetrieb eingesetzt werden.

Eine zusätzliche Möglichkeit zur Verringerung von Waschwässern ist der Einsatz eines geeigneten Strahlmittels, das nur die Oberflächenschicht entfernt. Dieses Verfahren ist ebenfalls innerhalb der Entstickungsanlage durchführbar. Das Strahlmittel (z.B. Glaskügelchen) mit den Bestandteilen der gasdiffusionshemmenden Oberflächenschicht kann dann gemeinsam mit der Flugasche des Elektrofilters verwertet werden.

Weitere vorteilhafte Weiterbildungen der Erfindung sind in den Unteransprüchen definiert.

Ein Ausführungsbeispiel für den Einsatz einer geeigneten Regeneriereinrichtung wird im folgenden unter Hinweis auf die beigefügten Zeichnungen näher beschrieben. Es stellen dar:
- Figur 1: ein schematischer Aufbau eines Katalysatorsteges mit Oberflächenschichten,
- Figur 2: eine Ausschnittvergrößerung von Figur 1;
- Figur 3: ein Verfahrensfließbild für die Reinigung von Katalysatoren innerhalb einer DENOX-Anlage,
- Figur 4: eine schematische Darstellung der Katalysatorreinigung mittels eines Strahlmittels.

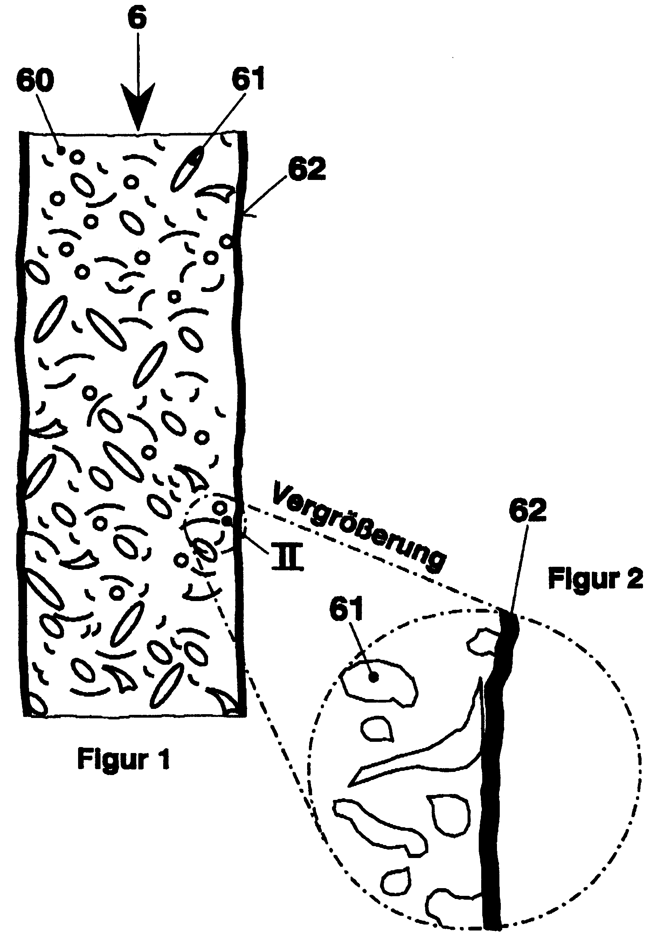

Die Figuren 1 und 2 zeigen vergrößert den Schnitt durch einen Katalysatorsteg 60 eines Katalysators 6. Dargestellt ist ein Katalysatorsteg 60 eines Wabenkatalysators mit Poren 61. Mit zunehmender Betriebsdauer wächst eine ca 1-100 µm dicke Oberflächenschicht 62 auf, die die Diffusion des zu reinigenden Rauchgases in das Katalysatormaterial, insbesondere in die Poren 61, mit zunehmender Dicke immer stärker behindert.

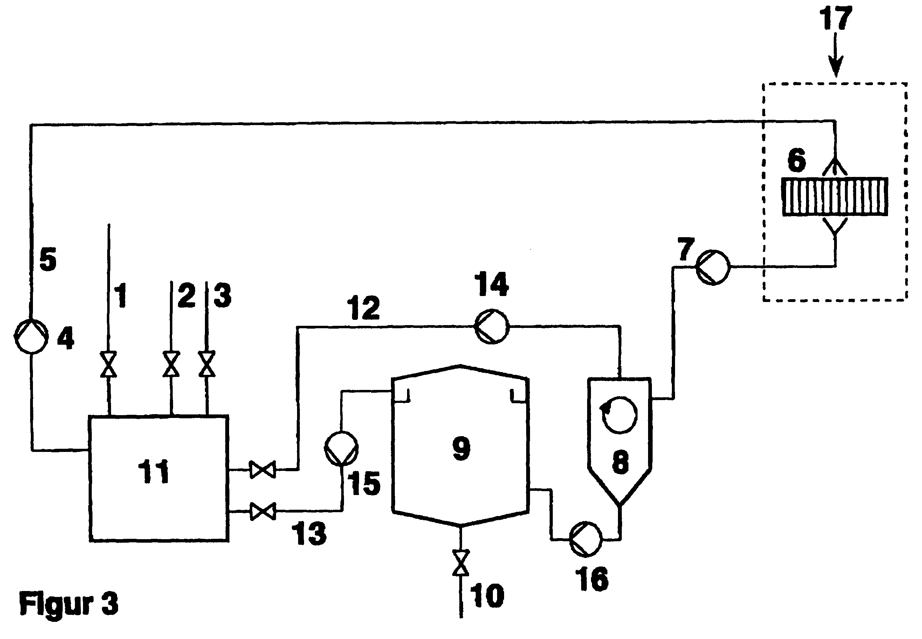

Ein Ausführungsbeispiel der vorliegenden Erfindung wird an den in Figur 3 gezeigten Verfahrensfließbild deutlich. Ein Behälter 11 wird über eine Leitung 1 mit entsalztem Wasser, z.B. Deionat der Vollentsalzungsanlage eines Kraftwerks, befüllt. Über Leitungen 2 und 3 können der Waschflüssigkeit Zusatzstoffe zugeführt werden, z.B. Regenerierungssubstanzen wie Vanadium, Mobydän oder Wolfram. Die Pumpe 4 fördert durch die Leitung 5 die Regeneriersuspension in die DENOX-Anlage 17, wo die Katalysatoren 6 gespült werden. Über eine geeignete Auffangeinrichtung, z.B. Trichter, und eine Pumpe 7 wird die Waschflüssigkeit mit den Inhaltsstoffen der Oberflächenschicht und den Katalysatorgiften zu einer Trennvorrichtung 8 geführt. Dort werden die Inhaltsstoffe auf geeignete Weise von der Waschflüssigkeit getrennt. Geeignet ist z.B. ein Hydrozyklon. Denkbar sind aber auch Filter oder dergleichen. Der stark feststoffbeladene Unterlauf der Trennvorrichtung 8 wird über die Pumpe 16 einem Absetzbehälter 9 zugeführt. In diesem Absetzbehälter 9 werden die festen Bestandteile weiter aufkonzentriert, im Teilstrom über eine Leitung 10 abgezogen und einer geeigneten, hier nicht dargestellten Abwasserbehandlung zugeführt. Der Überlauf des Absetzbehälters 9 und der Oberlauf der Trennvorrichtung 8 werden über die Leitungen 12 und 13 und die Pumpen 14 und 15 dem Behälter 11 zugeführt.

Dieser Aufbau kann durch geeignete Fällungsstufen erweitert werden, die gelöste Schadstoffe wie z.B. das Katalysatorgift Arsen ausfällen, so dass diese über die Trennvorrichtung 8 abgetrennt und aus der Waschflüssigkeit ausgeschleust werden. Auf diese Weise wird die Wasch- bzw. Regenerierungsflüssigkeit in einen Kreislauf geführt, dem nur ein gewisses Flüssigkeitsvolumen mit den aufkonzentrierten Schadstoffen pro Umlauf entzogen wird. Dieses Volumen wird über die Leitungen 1, 2 und 3 ergänzt.

Eine weitere Möglichkeit zur Ausführung ist das Verschließen der Katalysatorwaben bzw. des Reaktors unterhalb der Katalysatoren 6. Danach werden die Katalysatoren 6 mit der Wasch- bzw. Regenerierflüssigkeit gefüllt. Bei diesem Bad in der Regenerierflüssigkeit löst sich zunächst die gasdiffusionshemmende Oberflächenschicht. Innerhalb der Katalysatorporen lösen sich die Katalysatorgifte von den aktiven Zentren an der Katalysatoroberfläche und gehen in die Regenerierflüssigkeit über. Durch das Konzentrationsgefälle zwischen der Regenerierflüssigkeit innerhalb der Katalysatorporen und der Regenerierflüssigkeit in den Wabenkanälen wandern die gelösten Katalysatorgifte zu den Wabenkanälen. Nach einer bestimmten Zeit wird die Regenerierflüssigkeit mit den Bestandteilen der gasdiffusionshemmenden Oberflächenschicht und den Katalysatorgiften abgelassen. Anschließend werden die Katalysatoren mit Rauchgas oder Heißluft getrocknet. Der Vorteil dieser Ausführung liegt in dem geringen Verbrauch an Regenerierflüssigkeit.

Ergänzend zu den genannten Ausführungsbeispielen kann die Regenerierung von Katalysatoren direkt mit der Trocknung verbunden werden. Bei großen Entstickungsanlagen kann es sein, daß in den Katalysatoren 6 noch einigen Tonnen Regenerierflüssigkeit verbleiben. Die Stahlkonstruktion zur Aufnahme der Katalysatormodule muß für dieses zusätzliche Gewicht ausgelegt sein. In einigen Anlagen ist dies nicht der Fall. Deshalb muß dann, direkt nach der Regenerierung eines Teilabschnitts, eine Trocknung dieses Abschnitts durchgeführt werden. Dabei werden in einer Einrichtung die Katalysatoren 6 zunächst wie beschrieben regeneriert. Im Anschluß an die Regenerierung wird der regenerierte Abschnitt mit Heißluft oder Heißgas getrocknet. Dadurch wird die in den Katalysatoren 6 verbliebene Regeneriersuspension verdampft und ausgetragen.

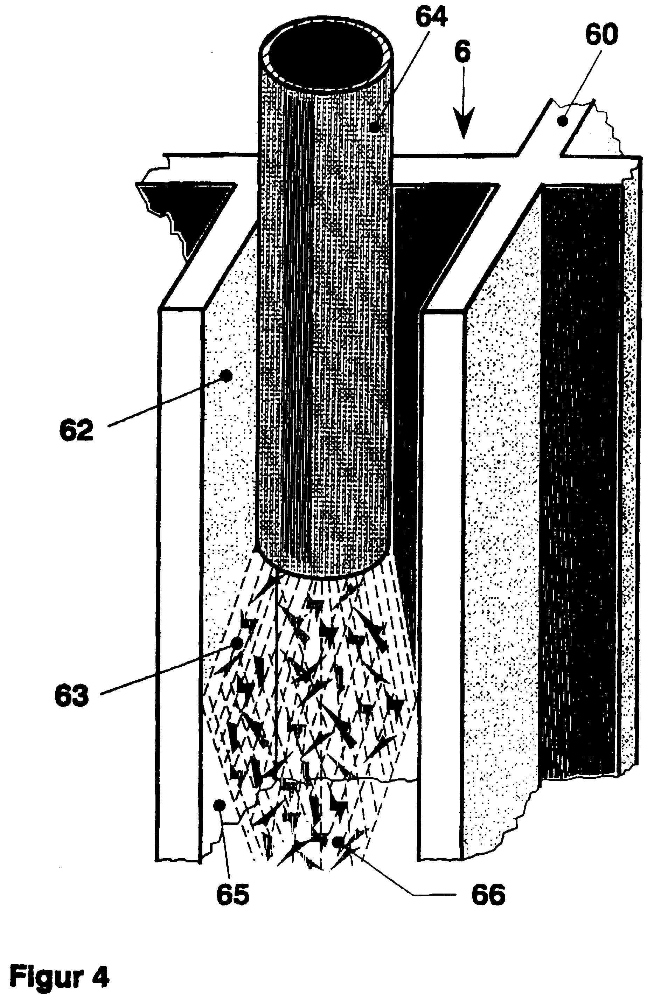

Figur 4 zeigt in schematischer Darstellung eine ergänzende Möglichkeit, die Oberflächenschicht 62 von Katalysatoren 6 zu entfernen. Ein Strahlmittel 63, z. B. Sand oder Glas, wird eingesetzt, um die Oberflächenschicht 62 mechanisch zu entfernen. Das Strahlmittel 63 wird durch ein Rohr 64 oder dergleichen auf die Oberfläche 65 des Katalysators 6 aufgeblasen. Das mit Teilen der Oberflächenschicht verunreinigte Strahlmittel 66 wird aus dem Katalysator 6 ausgeblasen oder z. B. bei der Reinigung mit der Waschflüssigkeit ausgespült.

### Beispiel:

Die Erfindung wurde an gebrauchten und desaktivierten Katatlysatoren erprobt. Dabei wurde ein desaktiviertes Katalysatorelement mit einer Gesamtlänge von 840 mm und einer Kantenlänge von 150 x 150 mm aus einer DENOX-Anlage ausgebaut und mit dem Regenerierungsverfahren behandelt. Vor der Regenerierung mit Deionat wurde das Katalysatorelement auf einem Prüfstand untersucht. Dann wurde das Katalysatorelement über einen Zeitraum von 5 Minuten mit Deionat gespült und anschließend mit Heißluft getrocknet. Eine nachfolgende Untersuchung Zeigte, daß sich die NOX-Abscheiderate über den gesamten Molverhältnisbereich NH₃/NOX, von 0,8 bis 1,2, um ca. 5% bis 6% erhöht hat, wie nachfolgender Tabelle zu entnehmen ist.

| | | | | | |
|---|---|---|---|---|---|
| Molverhältnis NH₃/NOX | 0,8 | 0,9 | 1,0 | 1,1 | 1,2 |
| NOX-Abscheiderate vor Regenerierung | 64,8 | 70,6 | 73,7 | 75,2 | 76,4 |
| NOX-Abscheiderate nach Regenerierung | 70,4 | 75,8 | 78,9 | 80,6 | 81,8 |

## Patentansprüche

1. Verfahren zum Reinigen und/oder Regenerieren von ganz oder teilweise desaktivierten Katalysatoren zur Entstickung von Rauchgasen, wobei die Katalysatoren mit einer Wasch- bzw. Regenerierflüssigkeit behandelt werden, **dadurch gekennzeichnet,** daß als Wasch- bzw. Regenerierflüssigkeit für die Behandlung der desaktivierten Katalysatoren ungesäuertes Deionat eingesetzt wird.

2. Verfahren nach Anspruch 1, dadurch gekennzeichnet, daß die Wasch- bzw. Regenerierflüssigkeit in einem Kreislauf geführt wird, wobei stromabwärts vom Katalysator ein Teilstrom abgezogen und durch frisches Deionat ersetzt wird.

3. Verfahren nach Anspruch 2, dadurch gekennzeichnet, daß das Deionat ohne Aufheizen eingesetzt wird.

4. Verfahren nach einem der vorhergehenden Ansprüche, dadurch gekennzeichnet, daß der Wasch- bzw. Regenerierflüssigkeit mindestens eine katalytisch aktive Komponente zugesetzt wird.

5. Verfahren nach einem der vorhergehenden Ansprüche, dadurch gekennzeichnet, daß die Wasch- bzw. Regenerierflüssigkeit in die Entstickungsanlage geführt wird, wo die desaktivierten Katalysatoren ohne Ausbau behandelt werden.

6. Verfahren nach Anspruch 5, dadurch gekennzeichnet, daß die Katalysatoren mit der Wasch- und Regenerierflüssigkeit gespült werden, und diese Flüssigkeit aufgefangen und einer Trennung zugeführt wird.

7. Verfahren nach einem der vorhergehenden Ansprüche, dadurch gekennzeichnet, daß die Katalysatoren einem Bad in der Wasch- bzw. Regenerierflüssigkeit ausgesetzt werden.

8. Verfahren nach Anspruch 7, dadurch gekennzeichnet, daß die Katalysatorwaben bzw. der Entstickungsreaktor an ihrer Unterseite verschlossen werden und die Katalysatoren mit der Wasch- bzw. Regenerierflüssigkeit gefüllt werden.

9. Verfahren nach einem der vorhergehenden Ansprüche, dadurch gekennzeichnet, daß bestehende Dampf- oder Luftblaseeinrichtungen, die der Entfernung von Flugstaub dienen, für das Einbringen der Wasch- bzw. Regenerierflüssigkeit genutzt werden.

10. Verfahren nach einem der vorhergehenden Ansprüche, dadurch gekennzeichnet, daß die Katalysatoren, vor der Behandlung mit der Wasch- bzw. Regenierungsflüssigkeit, mechanisch gereinigt werden.

11. Verfahren nach Anspruch 10, dadurch gekennzeichnet, daß vor der Behandlung mit Wasch- bzw. Regenerierflüssigkeit, Staubablagerungen manuell oder durch geeignete Reinigungseinrichtungen, insbesondere Durchblaseinrichtungen oder Absaugeinrichtungen entfernt werden.

12. Verfahren nach Anspruch 10 oder 11, dadurch gekennzeichnet, daß die Katalysatoroberfläche mit einem Strahlmittel behandelt wird.

13. Verfahren nach einem der vorhergehenden Ansprüche, dadurch gekennzeichnet, daß die Katalysatoren nach der Behandlung mit Wasch- bzw. Regenerierflüssigkeit, mittels Luft- oder Rauchgas getrocknet werden.

14. Verfahren nach Anspruch 13, dadurch gekennzeichnet, daß die Trocknung der Katalysatoren direkt nach der Behandlung eines Teilabschnitts durchgeführt wird.

## Claims

1. A method for scrubbing and/or regenerating of wholly or partially deactivated catalytic devices for nitrogen oxyde removal from stack gases, wherein the catalytic devices are treated with a scrubbing, or respectively regenerating fluid, characterized in that non acidified de-ionised water is used as scrubbing, or respectively regenerating fluid for treatment of the deactivated catalytic devices.

2. The method in accordance with claim 1, characterized in that the scrubbing, or respectively regenerating fluid is moved in circulation, wherein a partial flow is removed downstream of the catalytic device and replaced by fresh de-ionised water.

3. The method in accordance with claim 2, characterized in that the de-ionised water is used without heating.

4. The method in accordance with one of the preceding claims, characterized in that at least one catalytically active component is added to the scrubbing, or respectively regenerating fluid.

5. The method in accordance with one of the preceding claims, characterized in that the scrubbing or respectively regenerating fluid is introduced into the nitrogen oxyde removal unit, where the deactivated catalytic devices are treated without dismounting.

6. The method in accordance with claim 5, characterized in that the catalytic devices are rinsed with the scrubbing or respectively regenerating fluid, that said fluid is collected and subjected to a separation.

7. The method in accordance with one of the preceding claims, characterized in that the catalytic devices are subjected to a bath in the scrubbing, or respectively regenerating fluid.

8. The method in accordance with claim 7, characterized in that the honeycombs of the catalytic device or respectively the nitrogen oxyde removal reactor are closed at their bottom, and the catalytic devices are filled with the scrubbing, or respectively regenerating fluid.

9. The method in accordance with one of the preceding claims, characterized in that existing steam or air blowing devices used for removing flying dust are employed for introducing the scrubbing, or respectively regenerating fluid.

10. The method in accordance with one of the preceding claims, characterized in that, prior to treatment with the scrubbing or respectively regenerating fluid, the catalytic devices are mechanically cleaned.

11. The method in accordance with claim 10, characterized in that prior to treatment with the scrubbing or respectively regenerating fluid, dust deposits are removed manually or by means of suitable cleaning devices, in particular blowers or sucking devices.

12. The method in accordance with claim 10 or 11, characterized in that the surface of the catalytic devices is treated with sandblasting means.

13. The method in accordance with one of the preceding claims, characterized in that following treatment with the scrubbing or respectively regenerating fluid the catalytic devices are dried by air or stack gas.

14. The method in accordance with claim 7, characterized in that drying of the catalytic devices is performed immediately following the treatment of a partial section.

## Revendications

1. Procédé pour nettoyer et/ou régénérer des catalyseurs pour l'élimination des oxydes d'azote des gaz de fumée, partiellement ou totalement désactivés, dans lequel les catalyseurs sont traités avec un liquide de lavage ou de régénération, caractérisé en ce que de l'eau désionisée non-acidifiée est mise en oeuvre, en tant que liquide de lavage ou de régénération, pour le traitement des catalyseurs désactivés.

2. Procédé selon la revendication 1, caractérisé en ce que le liquide de lavage ou de génération circule en bouche et en ce que, en aval du catalyseur, une partie du flux est soutirée et remplacée par de l'eau désionisée fraîche.

3. Procédé selon la revendication 2, caractérisé en ce que l'eau désionisée est mise en oeuvre sans être chauffée.

4. Procédé selon l'une des revendications précédentes, caractérisé en ce qu'au moins un composé catalytiquement actif est ajouté au liquide de lavage ou de régénération.

5. Procédé selon l'une des revendications précédentes, caractérisé en ce que le liquide de lavage ou de régénération est amené dans l'installation d'élimination des oxydes d'azote, où les catalyseurs désactivés sont traités sans être démontés.

6. Procédé selon la revendication 5, caractérisé en ce que les catalyseurs sont rincés avec le liquide de lavage ou de régénération, que ce liquide est récupéré et soumis à une séparation.

7. Procédé selon l'une des revendications précédentes, caractérisé en ce que les catalyseurs sont soumis à un bain dans le liquide de lavage ou de régénération.

8. Procédé selon la revendication 7, caractérisé en ce que l'on obture les catalyseurs en nid d'abeille ou le réacteur d'élimination d'oxydes d'azote à leur partie inférieure et en ce que l'on remplit les catalyseurs avec le liquide de lavage ou de régénération.

9. Procédé selon l'une des revendications précédentes, caractérisé en ce que l'on utilise des installations soufflantes pour l'air ou la vapeur préexistantes, servant à l'élimination de poussières, pour introduire le liquide de lavage ou de régénération.

10. Procédé selon l'une des revendications précédentes, caractérisé en ce que les catalyseurs sont nettoyés mécaniquement avant le traitement avec le liquide de lavage ou de régénération.

11. Procédé selon la revendication 10, caractérisé en ce que avant le traîtement avec le liquide de lavage ou de régénération, les dépôts de poussière sont éliminés soit manuellement soit à l'aide d'installations de nettoyage appropriées, en particulier des dispositifs soufflants ou des dispositifs d'aspiration.

12. Procédé selon la revendication 10 ou 11, caractérisé en ce que la surface des catalyseurs est traitée avec un moyen de sablage.

13. Procédé selon l'une des revendications précédentes, caractérisé en ce que les catalyseurs sont séchés au moyen d'air ou de gaz de fumée après le traitement avec le liquide de lavage ou de régénération.

14. Procédé selon la revendication 13, caractérisé en ce que le séchage des catalyseurs est éffectué immédiatement après le traitement d'une zone partielle.
